# EUROPEAN PATENT SPECIFICATION

(11) **EP 2 979 436 B1**
(45) Date of publication and mention of the grant of the patent: **04.09.2019**
(21) Application number: 14732929.6
(22) Date of filing: 17.03.2014
(51) Int. Cl.: H04W 84/12, H04L 29/06, H04W 72/04, H04W 12/06, H04L 29/12, H04L 12/24, H04L 12/28

(54) **WLAN RESOURCE MANAGEMENT IN AN ACCESS NETWORK SYSTEM**
WLAN-RESSOURCENVERWALTUNG IN EINEM ZUGANGSNETZWERKSYSTEM
GESTION DES RESSOURCES D'UN RÉSEAU LOCAL SANS FIL DANS UN SYSTÈME DE RÉSEAU D'ACCÈS

(30) Priority: 29.03.2013 CN 201310111458
(43) Date of publication of application: 03.02.2016
(73) Proprietor: Alcatel Lucent, 91620 Nozay (FR)
(72) Inventor: WEN, Haibo, Shanghai 201206 (CN); YANG, Shuigen, Shanghai 201206 (CN); BIN, Fanxiang, Shanghai 201206 (CN)
(74) Representative: Louis Pöhlau Lohrentz
(86) International application number: PCT/IB2014/000497
(87) International publication number: WO 2014/155194

(56) References cited:
- US-A1- 2010 182 983
- XIANGQING CHANG YANG SHI HANGZHOU H3C TECH CO ET AL: "Applicability of Access Node Control Mechanism to WLAN based Broadband Networks; draft-xq-ancp-wlan-00.txt", APPLICABILITY OF ACCESS NODE CONTROL MECHANISM TO WLAN BASED BROADBAND NETWORKS; DRAFT-XQ-ANCP-WLAN-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 17 December 2011 (2011-12-17), pages 1-12, XP015079798, [retrieved on 2011-12-17]
- ERSUE M ET AL: "An Overview of the IETF Network Management Standards; draft-ietf-opsawg-management-stds-07.txt", AN OVERVIEW OF THE IETF NETWORK MANAGEMENT STANDARDS; DRAFT-IETF-OPSAWG-MANAGEMENT-STDS-07.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 20 March 2012 (2012-03-20), pages 1-102, XP015082061, [retrieved on 2012-03-20]

## Description

### FIELD OF THE INVENTION

The present invention relates to the field of communication technologies, and more specifically, to a method for managing WLAN (Wireless Local Area Network) resources in an access network system, an apparatus and system thereof.

### BACKGROUND OF THE INVENTION

As one of wireless wideband technologies, WLAN has gained a rapid development in recent years. Network operators introduce WLAN into their access network systems and expect to realize more value-added services through wireless technologies such as WLAN. They set up public WLANs in hot-spot areas such as airport, hotel, conference center, home and the like, to provide network access services. Centralized WLAN architecture becomes the first choice. A plurality of ACs (Access Controllers) are deployed in the access network; the ACs may be independently present in the access network or integrated on an access node AN. Through a CAPWAP (Control and Provisioning of Wireless Access Points) protocol, each AC performs WLAN control management on a considerable number of wireless termination points (WTP) and performs access management of terminal users. The AC just corresponds to an access node.

However, with the constantly expansion of networking scale and increasingly wider deployment of WLAN, it becomes an imminent problem to be solved how to employ a unified and effective mechanism in the access network system to manage WLAN (including creation, release of WLAN, etc.) through AC, so as to satisfy the flexible requirements of terminal users.

In the access network, in order to perform QoS (Quality of Service)-demanding and service-related operations with respect to each user, BBF standardization organization defines a Layer 2 control mechanism that runs between an access node and a Broadband Network Gateway, and meanwhile IETF (which is Internet Engineering Task Force) formulates a concerned access node control protocol ANCP. Through the ANCP protocol, network operators may manage various access technologies (e.g., xDSL, sPON) in a unified management and control manner.
XIANGQING CHANG YANG SHI HANGZHOU H3C TECH CO ET AL: "Applicability of Access Node Control Mechanism to WLAN based Broadband Networks" (draft-xp-ancp-wlan-00.txt; 17 December 2011, pages 1 - 12, XP015079798) describes the applicability of the Access Node Control Protocol ANCP on WLAN, in particular ANCP based WLAN discovery, roaming, QoS configuration, key transfer and notification of authentication, and testing capability. By the ANCP protocol QoS profile information is transmitted from the NAS / network gateway to the wireless Access Node / Access controller. A new message type for key delivery (encryption), identification of user or for roaming is defined.

### SUMMARY OF THE INVENTION

According to the present invention there is provided a method according to claim 1, a network gateway according to claim 6, an access control device according to claim 10 and an access network system according to claim 13. Embodiments are further defined by the dependent claims.

The present invention intends to provide a technical solution for supporting WLAN resource management in an access network system, which may realize WLAN resource configuration management in the access network based on a particular WLAN resource configuration request through an access node control protocol ANCP between a network gateway BNG and an access control device AC.

Methods and apparatuses are defined in the attached claims.

According to one aspect of the present invention, there is provided a method for WLAN resource management in an access network system, the access network system including a network gateway, an access control device, and a wireless access node controlled by the access control device, wherein the network gateway receives a WLAN resource configuration request; and transmits an access node control protocol ANCP-based WLAN resource configuration message to the access control device in accordance with the received WLAN resource configuration request; the access control device controls a corresponding wireless access node to perform configuration management of WLAN in accordance with the WLAN resource configuration message.

According to another aspect of the present invention, there is provided a network gateway for WLAN resource management in an access network system, which comprises: a receiving module configured to receive a WLAN resource configuration request; a transmitting module configured to transmit an access node control protocol ANCP-based WLAN resource configuration message to an access control device based on the WLAN resource configuration request.

According to a further aspect of the present invention, there is provided an access control device for WLAN resource management in an access network system, which comprises: a receiving module configured to obtain an access node control protocol ANCP-based WLAN resource configuration message from a network gateway in the access network system; a control module configured to control a corresponding wireless access node to perform configuration management of WLAN in accordance with the WLAN resource configuration message.

According to a still further aspect of the present invention, there is provided an authentication server for WLAN resource management, which comprises: a receiving module configured to receive a WLAN service request from a mobile site; an authentication module configured to authenticate the WLAN service request and assign WLAN access parameters to the mobile site based on the authentication result; and a transmitting module configured to transmit the WLAN access parameters to the mobile site and transmit a WLAN resource configuration request to a network gateway BNG in the access network system, the WLAN resource configuration request being used for a wireless access node to perform corresponding WLAN configuration management adapted for the mobile site to access in an access network system.

According to a yet further aspect of the present invention, there is provided an access network system that comprises a network gateway, an access control device, and a plurality of wireless access nodes controlled by the access control device, wherein the network gateway receives a WLAN resource configuration request; and transmits an access node control protocol ANCP-based WLAN resource configuration message to the access control device in accordance with the WLAN resource configuration request; and the access control device controls a corresponding wireless access node to perform configuration management of WLAN in accordance with the WLAN resource configuration message.

The present invention has the following potential technical advantages:
An access network operator may manage and control various access technologies in an access network system, including a centralized WLAN deployed in an access network, through a unified ANCP protocol, which may efficiently create/ delete a WLAN that satisfies particular requirements on a corresponding WTP and also control and manage WLAN access of a user.

### BRIEF DESCRIPTION OF THE DRAWINGS

Features, properties, and advantages of the present invention will become more apparent through the following detailed description with reference to the accompanying drawings; like elements in the accompanying drawings have the same identifiers, in which:
Fig. 1 is a WLAN deployment diagram under an access network system provided in the present invention;
Fig. 2 is a WLAN control message embodiment of an ANCP protocol provided in the present invention;
Fig. 3 is a WLAN dynamic creation embodiment in an access network system provided in the present invention;
Fig. 4 is a WLAN dynamic release embodiment in an access network system provided in the present invention;
Fig. 5 is a WLAN dynamic release embodiment in an access network system provided in the present invention.

### DETAILED DESCRIPTION OF THE INVENTION

Hereinafter, the preferred embodiments of the present invention will be described in detail with reference to the accompanying drawings.

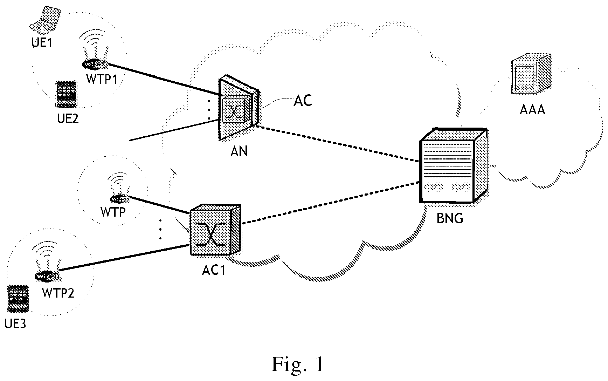

Fig. 1 is a WLAN deployment diagram under an access network system provided by the present invention. Several WiFi mobile sites UE1, UE2, UE3 are connected to an access controller AC1 or an access node AN having an access controller AC via their respectively wireless access nodes WTP1, WTP2, the access controller AC1 and the access node AN in the access network system may be concatenated by a switch in Ethernet and converged together to a broadband network gateway BNG located at the edge of the access network system and in turn connected to an IP/MPLS (Multi-Protocol Label Switching) network that is a backbone network.

The broadband network gateway BNG shown in Fig. 1, on one hand, performs the functionality of a network bearer, in charge of terminating user network connection in the access network system and converging users' traffic; and on the other hand, performs a control and implementation function, which may cooperate with an authentication system, charging system, client management system, and service policy control system to realize authentication, charging and management of user access, where it further performs WLAN (Wireless Local Area Network) resource management in the access network system. It may receive a WLAN resource configuration request from a third-party server via a particular protocol interface, and may transmit an access node control ANCP protocol - based WLAN resource configuration message to the access control device AC1 or the access node AN with the functionality of the access control AC via the ANCP protocol interface in accordance with said WLAN resource configuration request.

According to one embodiment of the present invention, the above mentioned WLAN resource configuration request may be initiated by an AAA authentication server. The AAA authentication server performs an access authentication function such as authenticating user identity and/or traffic, which saves user data such as user identity information and relevant traffic properties; when it receives an access authentication request from a user, it supports query of the user data in a database and provides the authentication result to the user terminal and its network access device. Here, the AAA authentication server authenticates WLAN service requests from WiFi mobile sites UE1, UE2, UE3. On one hand, it transmits a WLAN resource configuration request to the broadband network gateway BNG in the access network system based on the authentication result, so as to perform, for the wireless access nodes WTP1, WTP2, a corresponding WLAN configuration management adapted for the mobile sites to access in the access network system. Typically, the protocol interfacing manner between the AAA server and the broadband network gateway BNG may adopt the RADIUS protocol manner. On the other hand, it may assign corresponding WLAN access parameters to the mobile sites according to the previous WLAN configuration management response and provide the parameters to the WiFi mobile sites.

According to another embodiment of the present invention, the above mentioned WLAN resource configuration request may be initiated by a policy server to notify the BNG to create a certain WLAN on some particular WTPs according to the operation requirements.

The access node AN in Fig. 1 may be a DSLAM (Digital Subscriber Line Access Multiplexer) with the functionality of an access controller AC, or an OLT (Optical Network Terminal), an LAN SWITCH, etc.; the access node AN and the access controller AC1 may perform centralized WLAN configuration management with respect to the accessing wireless access nodes WTP1, WTP2 through a particular protocol such as CAPWAP or LWAPP (Lightweight Access Point Protocol). Here, the access node AN and the access controller AC1 may receive an access node control ANCP protocol-based WLAN resource configuration message from the broadband network gateway BNG in the access network system via the ANCP protocol interface, and control its corresponding wireless access nodes WTP1, WTP2 to perform configuration management of WLAN via the CAPWAP protocol interface in accordance with the WLAN resource configuration message, for example, creating a WLAN that may provide mobile sites UE1, UE2 with traffic access at WTP1; and create a WLAN that may provide the mobile site UE3 with traffic access at WTP2.

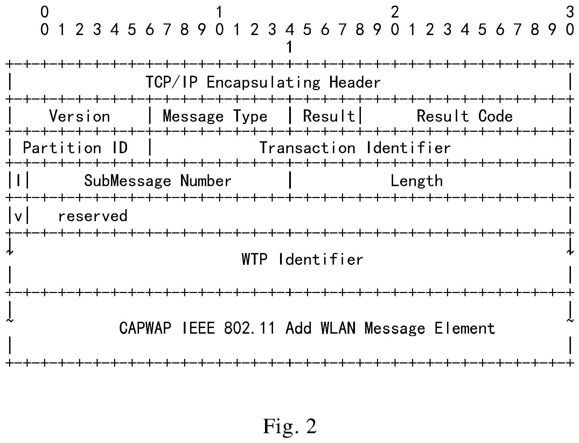

Fig. 2 is a WLAN control message embodiment according to the ANCP protocol provided in the embodiments of the present invention, which may be used for the broadband network gateway BNG to transmit a WLAN resource configuration management message to the access controller, and for the access controller to report WLAN resources to the broadband network gateway BNG and respond to the WLAN resource configuration management message.

With the broadband network gateway BNG transmitting a WLAN resource configuration management message to the access controller as an example, it at least includes the following information items:
one message type (Message Type) parameter to distinguish from other ANCP protocol type of messages;

The addressable information of a wireless access node WTP in the access network system may be identified with version (v) and wireless access node identifier (WTP Identifier). The WTP Identifier may be the IP address of the WTP, v parameter is used to indicate the type of the IP address of the WTP. For example, v parameter being "0" indicates that the IP address is an IPv4-based address type; v parameter being "1" indicates that the IP address is an IPv6-based address type; and

Corresponding WLAN resource configuration parameter (CAPWAP IEEE 802.11 WLAN Message Element), which may be a WLAN management element based on a CAPWAP protocol manner for indicating the AC to change the service provided on the WTP; the WLAN management element may be used for creating, upgrading or deleting the WLAN on the WTP. For various message elements of the CAPWAP IEEE802.11 WLAN, see RFC5416.

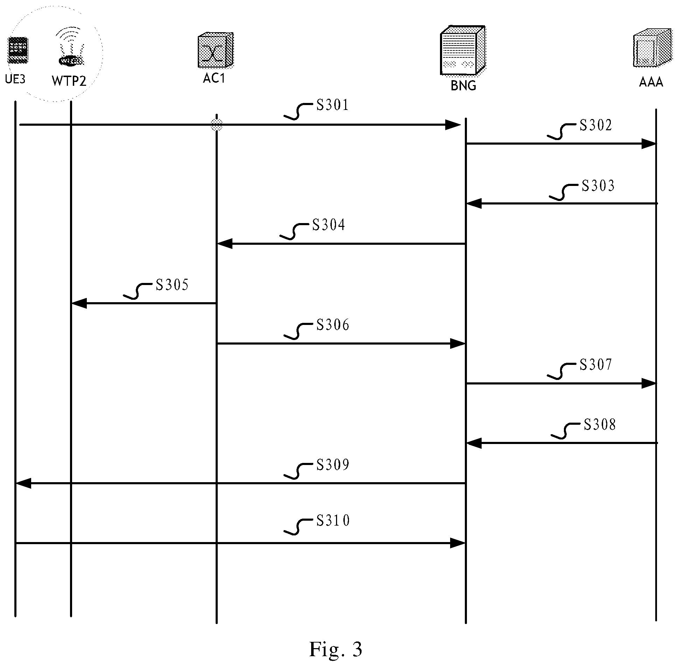

Fig. 3 is a WLAN dynamic creation example in an access network system provided in the embodiments of the present invention. In Fig. 3, the broadband network gateway BNG dynamically creates, for a WiFi mobile site UE3, a WLAN adapted for the mobile site to access in the access network system, in accordance with a WLAN resource configuration request from an AAA server.

At step S301, the WiFi mobile site UE3 may be associated to a wireless access node WTP2 in the access network system via a public service set identifier (SSID) and in turn initialize an authentication request, which includes user information such as account, password, affiliated domain (or the required traffic type), etc. WTP2 transmits an authentication request message to a access controller AC1 through a CAPWAP protocol; when receiving the authentication request message, the access controller AC1 further places the identification information of the WTP2 itself (e.g., IP address information of WTP) and identification information of AC1 (e.g., IP address of the AC) into the authentication request message, and transmits it to the broadband network gateway BNG based on an ANCP protocol manner.

At step S302, when receiving the authentication request message, the broadband network gateway further transmits a RADIUS protocol manner-based access request (Access_Request) packet to an AAA server.

At step S303, the AAA server receives the Access_Request packet and authenticates whether this request is legal. When the authentication passes, it decides whether WTP2 corresponding to the WiFi mobile site UE3 has a WLAN that fits the access conditions; if a WIT (WLAN Information Table) has a WLAN that fits particular conditions, it adds an identification corresponding to the WiFi mobile site UE3 into the corresponding WIT entries, and assigns and transmits corresponding WLAN access parameters to the mobile site; if the WIT does not have a WLAN that fits particular conditions, it will assign corresponding WLAN access parameters (e.g., corresponding SSID of the WLAN, the enciphering/deciphering manner, etc.) for the WiFi mobile site UE3; meanwhile, it transmits a WLAN resource configuration request to the broadband network gateway BNG in the access network system to request creation of a corresponding WLAN on WTP2 to which the site UE3 correspondingly access in order to provide services.

At step S304, after receiving the WLAN resource configuration request from the AAA server and based on the WLAN resource request, the broadband network gateway BNG transmits an access node control ANCP protocol-based WLAN resource configuration message to the access control device AC1.

At step S305, the access control device AC1 obtains the access node control ANCP protocol-based WLAN resource configuration message from the network gateway BNG, and it controls a corresponding wireless access node WTP to perform configuration management of WLAN according to said WLAN resource configuration message, i.e., creating a corresponding WLAN on WTP2 to which the WiFi mobile site UE3 correspondingly access in order to provide services.

At step S306, after the access control device AC1 successfully creates the WLAN on WTP2, the access control device AC1 transmits a corresponding response message to the broadband network gateway BNG for confirming whether said WLAN resource configuration succeeds or fails.

At step S307, after receiving said response message, the broadband network gateway BNG further transmits the WLAN resource configuration result to the AAA authentication server (or the policy server).

At step S308, the AAA server transmits an access accept (Access_Accept) packet based on the response message, the packet carrying the corresponding WLAN access parameters assigned for the WiFi mobile site UE3.

At step S309, the broadband network gateway BNG further transmits, in a corresponding manner, the WLAN access parameters in the Access_Accept packet to the authentication requesting party - the mobile site UE3.

At step S310, the mobile site UE3 performs 802.11 association or re-association to connect to the created WLAN with the obtained WLAN access parameters, and assigns the network access parameters for the mobile site UE3, for example, configuring an IP address for the mobile network terminal through a DHCP protocol, such that it obtains a capability of retrieving relevant network resources.

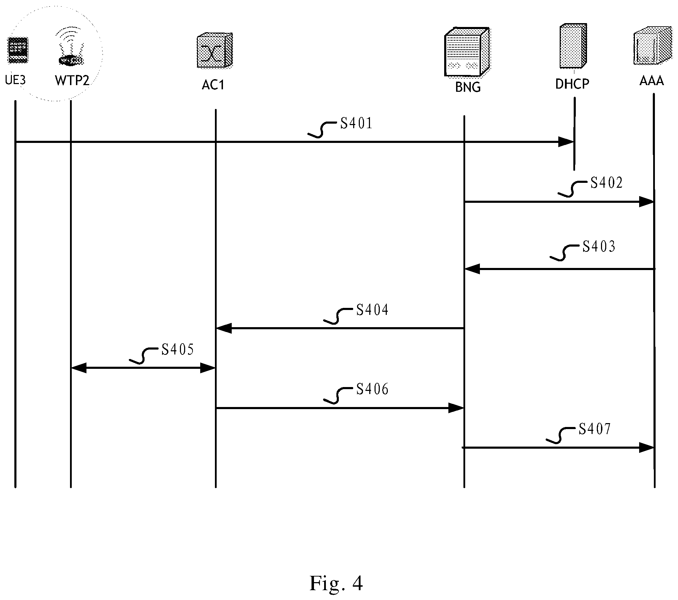

Fig. 4 is a WLAN dynamic release example provided in the embodiments of the present invention. In Fig. 4, based on the mobile site informing manner, a broadband network gateway BNG releases WLAN access resources for a mobile site UE3 in the access network system in accordance with a WLAN resource configuration request from an AAA server.

At step S401, when the mobile site UE3 exists from WLAN, it would transmit a DHCP release message to a DHCP server.

At step S402, the broadband network gateway BNG determines that the mobile site exits based on the obtained DHCP protocol message and in turn informs the AAA server to stop charging.

At step S403, when receiving the message of stop charging, the AAA server decides whether to perform WLAN resource configuration update. First, it updates the corresponding WIT entry, i.e., deleting the mobile site information from the corresponding WLAN; when the WLAN has no users, the AAA server transmits a WLAN resource configuration request to the broadband network gateway BNG in the access network system to request it to delete the corresponding WLAN in the access network system so as to release the resources.

At step S404, after receiving the WLAN resource configuration request from the AAA server, the broadband network gateway BNG transmits an access node control ANCP protocol-based WLAN resource configuration message to the access control device AC1 in accordance with said WLAN resource request to request deletion of the corresponding WLAN at the WTP to which the mobile site correspondingly access, so as to stop providing services.

At step S405, the access control device AC1 obtains the access node control ANCP protocol-based WLAN resource configuration message from the network gateway BNG, and it controls its corresponding wireless access node WTP to perform configuration management of WLAN according to the WLAN resource configuration message, i.e., creating a corresponding WLAN at WTP2 to which the WiFi mobile site UE3 correspondingly access, so as to stop providing services.

At step S406, after successfully deleting the WLAN at WTP2, the access control device AC1 transmits a corresponding response message to the broadband network gateway BNG for confirming success of said WLAN resource configuration.

At step S407, after receiving the response message, the broadband network gateway BNG further transmits the WLAN resource configuration result to the AAA authentication server (or the policy server).

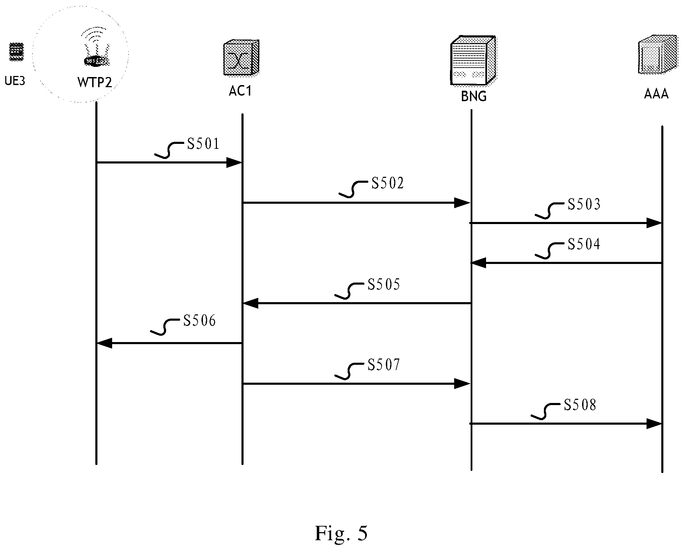

Fig. 5 is a WLAN dynamic release embodiment in an access network system provided in the embodiments of the present invention. In the figure, based on WTP2 detecting and reporting the WLAN resources, the broadband network gateway BNG releases WLAN access resources for a mobile site UE3 in an access network system in accordance with the WLAN resource configuration request from an AAA server.

At step S501, when the mobile site UE3 leaves WLAN without any symptom or notification, after a certain period of time, WTP2 will detect that the mobile site UE3 has been overtime, and it will transmit a CAPWAP protocol-based message to an access controller AC1 to inform it to delete this mobile site.

At step S502, the access controller AC1 will inform the broadband network gateway BNG through an ANCP protocol manner-based WLAN resource control message to indicate that its mobile site UE3 has exited from WTP2.

At step S503, the broadband network gateway BNG reports exit of the mobile site to the AAA server.

At step S504, the AAA server will decide whether to perform WLAN resource configuration update based on said resource report. First, it updates the corresponding WIT entry, i.e., deleting the mobile site UE3 information from the corresponding WLAN entry; when the WLAN has no users, the AAA server transmits a WLAN resource configuration request to the broadband network gateway BNG in the access network system to request it to delete the corresponding WLAN so as to release the resources.

At step S505, the broadband network gateway BNG transmits an access node control ANCP protocol-based WLAN resource configuration message to the access controller AC1 to request it to delete the corresponding WLAN on WTP2.

At step S506, the access controller AC1 controls its corresponding wireless access node WTP2 to perform configuration management of WLAN in accordance with the access node control ANCP protocol-based WLAN resource configuration message to delete the corresponding WLAN to which WTP2 correspondingly access, so as to provide services.

At step S507, after successfully deleting the WLAN at WTP, the access control device AC1 transmits a corresponding response message to the broadband network gateway BNG for confirming success of the WLAN resource configuration.

At step S508, after receiving the response message, the broadband network gateway BNG further transmits the WLAN resource configuration result to the AAA authentication server (or the policy server).

Those skilled in the art should understand that the above depicted means and functions may be implemented in combination with a program control microprocessor and software functions of a general computer, and/or implemented using an application-specific integrated circuit (ASIC). It should also be understood that although the present invention is mainly explained in the form of method and apparatus, the present invention may also be embodied into a computer program product and a system including a computer processor and a memory connected to the processor, wherein the memory may be encoded with one or more programs performing the functions disclosed here.

Although some embodiments have been provided above to illustrate the present invention, they are used to limit the protection scope of the present invention. Those skilled in the art may perform various modifications on the embodiments without departing from the scope of the present invention, which is defined solely by the appended claims. All such modifications fall within the scope of the present invention.

## Claims

1. A method for wireless local area network WLAN resource management in an access network system, the access network system including a network gateway, an access control device, and a wireless access node controlled by the access control device, the method comprising:
receiving (303), by the network gateway, a WLAN resource configuration request;
transmitting (304), by the network gateway, an access node control ANCP protocol-based WLAN resource configuration message to the access control device in accordance with the received WLAN resource configuration request thereby requesting creation or deletion of a WLAN on the wireless access node;
controlling, (305) by the access control device, the wireless access node to perform configuration management of the WLAN in accordance with the WLAN resource configuration message, wherein the configuration management of the WLAN comprises creating or deleting the WLAN on the wireless access node.

2. The method according to claim 1, wherein the ANCP protocol-based WLAN resource configuration message at least includes the following:
a message type to distinguish from other ANCP protocol type of messages;
addressable information of a wireless access node in the access network system; and
a WLAN resource configuration parameter.

3. The method according to claim 2, wherein the WLAN resource configuration parameter is a WLAN management element conforming to a Control and Provisioning of Wireless Access Points CAPWAP protocol.

4. The method according to claim 1, wherein the WLAN resource configuration request comes from a third-party authentication server, the third-party authentication server performs access authentication and management of a WLAN service request from a user and generates the WLAN resource configuration request for the network gateway in the access network system.

5. The method according to claim 1, wherein the method further comprises:
transmitting, by the access control device, a response message to the network gateway to confirm whether the WLAN resource configuration is successful.

6. A network gateway for WLAN resource management in an access network system, the network gateway comprising:
a receiving module configured to receive a WLAN resource configuration request;
a transmitting module configured to transmit an access node control ANCP protocol-based WLAN resource configuration message to an access control device in accordance with the received WLAN resource configuration request thereby requesting creation or deletion of a WLAN on a wireless access node.

7. The network gateway according to claim 6, wherein the WLAN resource configuration request comes from a third-party authentication server or a policy server.

8. The network gateway according to claim 7, wherein the receiving module is further configured to receive a response message from the access control device to confirm whether the WLAN resource configuration is successful.

9. The network gateway according to claim 8, wherein the transmitting module is further configured to transmit a WLAN resource configuration result to a third party authentication server or a policy server in accordance with the response message.

10. An access control device for WLAN resource management in an access network system, **characterized in that** the access control device comprises:
a receiving module configured to obtain from a network gateway in the access network system an access node control ANCP protocol-based WLAN resource configuration message requesting creation or deletion of a WLAN on a wireless access node;
a control module configured to control the wireless access node to perform configuration management of the WLAN in accordance with the WLAN resource configuration message, wherein the configuration management of the WLAN comprises creating or deleting the WLAN on the wireless access node.

11. The access control device according to claim 10, wherein the control module is further configured to transmit a response message to the network gateway to confirm whether the WLAN resource configuration is successful.

12. The access control device according to Claim 10, wherein it further comprises:
a detecting module configured to detect usage of the configured WLAN resources and report to the network gateway in the access network system.

13. An access network system, the access network system comprising a gateway, an access control device, and a plurality of wireless access nodes controlled by the access control device, wherein:
the network gateway is configured to receive a WLAN resource configuration request and to transmit an access node control ANCP protocol-based WLAN resource configuration message to the access control device in accordance with the WLAN resource configuration request thereby requesting creation or deletion of a WLAN on a wireless access node;
the access control device is configured to control the wireless access node to perform configuration management of the WLAN in accordance with the WLAN resource configuration message, wherein the configuration management of the WLAN comprises creating or deleting the WLAN on the wireless access node.

14. The access network system according to claim 13, wherein the access network system further comprises an authentication server for WLAN resource management, the authentication server comprising:
a receiving module configured to receive a WLAN service request from a mobile site;
an authentication module configured to authenticate the WLAN service request and assign WLAN access parameters to the mobile site; and
a transmitting module configured to transmit the WLAN access parameters to the mobile site, and transmit the WLAN resource configuration request to the network gateway in the access network system, the WLAN resource configuration request causing the network gateway to transmit the access node control ANCP protocol-based WLAN resource configuration message to the access control device thereby requesting creation or deletion of the WLAN on the wireless access node for performing, for the wireless access node, corresponding WLAN configuration management adapted for the mobile site to access in the access network system, wherein the configuration management of the WLAN comprises creating or deleting the WLAN on the wireless access node.

15. The access network system according to claim 14, wherein the receiving module of the authentication server is further configured to receive a WLAN resource report in the access network system and to determine update of the WLAN resource configuration based on the WLAN resource report.

## Patentansprüche

1. Verfahren zur drahtlosen lokalen Netzwerk(WLAN)-ressourcenverwaltung in einem Zugangsnetzwerksystem, wobei das Zugangsnetzwerksystem ein Netzwerk-Gateway, eine Zugangssteuervorrichtung und einen drahtlosen Zugangsknoten, der durch die Zugangssteuervorrichtung gesteuert wird, aufweist, wobei das Verfahren Folgendes umfasst:
Empfangen (303) durch das Netzwerk-Gateway einer WLAN-Ressourcenkonfigurationsanforderung;
Senden (304) durch das Netzwerk-Gateway einer zugangsknotensteuerprotokoll(ANCP)-basierten WLAN-Ressourcenkonfigurationsnachricht zu der Zugangssteuervorrichtung gemäß der empfangenen WLAN-Ressourcenkonfigurationsanforderung, wobei die Einrichtung oder Entfernung eines WLAN auf dem drahtlosen Zugangsknoten angefordert wird;
Steuern (305) durch die Zugangssteuervorrichtung des drahtlosen Zugangsknotens, um eine Konfigurationsverwaltung des WLAN gemäß der WLAN-Ressourcenkonfigurationsnachricht durchzuführen, wobei die Konfigurationsverwaltung des WLAN das Einrichten oder Entfernen des WLAN auf dem drahtlosen Zugangsknoten umfasst.

2. Verfahren nach Anspruch 1, wobei die ANCP-Protokoll-basierte WLAN-Ressourcenkonfigurationsnachricht mindestens Folgendes aufweist:
eine Nachrichtenart, um von einer anderen ANCP-Protokollart von Nachrichten zu unterscheiden;
adressierbare Informationen eines drahtlosen Zugangsknotens in dem Zugangsnetzwerksystem; und
einen WLAN-Ressourcenkonfigurationsparameter.

3. Verfahren nach Anspruch 2, wobei der WLAN-Ressourcenkonfigurationsparameter ein WLAN-Verwaltungselement ist, das einem CAPWAP(Control and Provisioning of Wireless Access Points, Steuerung und Bereitstellung von drahtlosen Zugangspunkten)-Protokoll entspricht.

4. Verfahren nach Anspruch 1, wobei die WLAN-Ressourcenkonfigurationsanforderung von einem Authentifizierungsserver eines Drittanbieters kommt, wobei der Authentifizierungsserver eines Drittanbieters eine Zugangsauthentifizierung und Verwaltung einer WLAN-Dienstanforderung von einem Benutzer durchführt und die WLAN-Ressourcenkonfigurationsanforderung für das Netzwerk-Gateway in dem Zugangsnetzwerksystem erzeugt.

5. Verfahren nach Anspruch 1, wobei das Verfahren ferner Folgendes umfasst:
Senden durch die Zugangssteuervorrichtung einer Antwortnachricht zu dem Netzwerk-Gateway, um zu bestätigen, ob die WLAN-Ressourcenkonfiguration erfolgreich ist.

6. Netzwerk-Gateway zur WLAN-Ressourcenverwaltung in einem Zugangsnetzwerksystem, wobei das Netzwerk-Gateway Folgendes aufweist:
ein Empfangsmodul, das konfiguriert ist, um eine WLAN-Ressourcenkonfigurationsanforderung zu empfangen;
ein Sendemodul, das konfiguriert ist, um eine zugangsknotensteuerprotokoll(ANCP)-basierte WLAN-Ressourcenkonfigurationsnachricht zu einer Zugangssteuervorrichtung gemäß der empfangenen WLAN-Ressourcenkonfigurationsanforderung zu senden, wobei die Einrichtung oder Entfernung eines WLAN auf einem drahtlosen Zugangsknoten angefragt wird.

7. Netzwerk-Gateway nach Anspruch 6, wobei die WLAN-Ressourcenkonfigurationsanforderung von einem Dritt-Authentifizierungsserver oder einem Richtlinienserver kommt.

8. Netzwerk-Gateway nach Anspruch 7, wobei das Empfangsmodul ferner konfiguriert ist, um eine Antwortnachricht von der Zugangssteuervorrichtung zu empfangen, um zu bestätigen, ob die WLAN-Ressourcenkonfiguration erfolgreich ist.

9. Netzwerk-Gateway nach Anspruch 8, wobei das Sendemodul ferner konfiguriert ist, um ein WLAN-Ressourcenkonfigurationsergebnis zu einem Dritt-Authentifizierungsserver oder einem Richtlinienserver gemäß der Antwortnachricht zu senden.

10. Zugangssteuervorrichtung zur WLAN-Ressourcenverwaltung in einem Zugangsnetzwerksystem, **dadurch gekennzeichnet, dass** die Zugangssteuervorrichtung Folgendes aufweist:
ein Empfangsmodul, das konfiguriert ist, um von einem Netzwerk-Gateway in dem Zugangsnetzwerksystem eine zugangsknotensteuerprotokoll(ANCP)-basierte WLAN-Ressourcenkonfigurationsnachricht zu erhalten, die die Einrichtung oder Entfernung eines WLAN auf einem drahtlosen Zugangsknoten anfordert;
ein Steuermodul, das konfiguriert ist, um den drahtlosen Zugangsknoten zu steuern, um eine Konfigurationsverwaltung des WLAN gemäß der WLAN-Ressourcenkonfigurationsnachricht durchzuführen, wobei die Konfigurationsverwaltung des WLAN das Einrichten oder Entfernen des WLAN auf dem drahtlosen Zugangsknoten umfasst.

11. Zugangssteuervorrichtung nach Anspruch 10, wobei das Steuermodul ferner konfiguriert ist, um eine Antwortnachricht zu dem Netzwerk-Gateway zu senden, um zu bestätigen, ob die WLAN-Ressourcenkonfiguration erfolgreich ist.

12. Zugangssteuervorrichtung nach Anspruch 10, wobei sie ferner Folgendes aufweist:
ein Erkennungsmodul, das konfiguriert ist, um die Nutzung der konfigurierten WLAN-Ressourcen zu erkennen und dem Netzwerk-Gateway in dem Zugangsnetzwerksystem mitzuteilen.

13. Zugangsnetzwerksystem, wobei das Zugangsnetzwerksystem ein Gateway, eine Zugangssteuervorrichtung und mehrere drahtlose Zugangsknoten, die durch die Zugangssteuervorrichtung gesteuert werden, aufweist, wobei:
das Netzwerk-Gateway konfiguriert ist, um eine WLAN-Ressourcenkonfigurationsanforderung zu empfangen und eine zugangsknotensteuerprotokoll(ANCP)-basierte WLAN-Ressourcenkonfigurationsnachricht zu der Zugangssteuervorrichtung gemäß der WLAN-Ressourcenkonfigurationsanforderung zu senden, wobei die Einrichtung oder Entfernung eines WLAN auf einem drahtlosen Zugangsknoten angefragt wird; wobei die Zugangssteuervorrichtung konfiguriert ist, um den drahtlosen Zugangsknoten zu steuern, um eine Konfigurationsverwaltung des WLAN gemäß der WLAN-Ressourcenkonfigurationsnachricht durchzuführen, wobei die Konfigurationsverwaltung des WLAN das Einrichten oder Entfernen des WLAN auf dem drahtlosen Zugangsknoten umfasst.

14. Zugangsnetzwerksystem nach Anspruch 13, wobei das Zugangsnetzwerksystem ferner einen Authentifizierungsserver zur WLAN-Ressourcenverwaltung aufweist, wobei der Authentifizierungsserver Folgendes aufweist:
ein Empfangsmodul, das konfiguriert ist, um eine WLAN-Dienstanforderung von einem mobilen Standort zu empfangen;
ein Authentifizierungsmodul, das konfiguriert ist, um die WLAN-Dienstanforderung zu authentifizieren und WLAN-Zugangsparameter dem mobilen Standort zuzuweisen; und
ein Sendemodul, das konfiguriert ist, um die WLAN-Zugangsparameter zu dem mobilen Standort zu senden und die WLAN-Ressourcenkonfigurationsanforderung zu dem Netzwerk-Gateway in dem Zugangsnetzwerksystem zu senden, wobei die WLAN-Ressourcenkonfigurationsanforderung bewirkt, dass das Netzwerk-Gateway die zugangsknotensteuerprotokoll(ANCP)-basierte WLAN-Ressourcenkonfigurationsnachricht zu der Zugangssteuervorrichtung sendet, wobei die Einrichtung oder Entfernung des WLAN auf dem drahtlosen Zugangsknoten angefragt wird, um für den drahtlosen Zugangsknoten eine entsprechende WLAN-Konfigurationsverwaltung durchzuführen, die für den mobilen Standort angepasst ist, um in dem Zugangsnetzwerksystem zuzugreifen, wobei die Konfigurationsverwaltung des WLAN das Einrichten oder Entfernen des WLAN auf dem drahtlosen Zugangsknoten umfasst.

15. Zugangsnetzwerksystem nach Anspruch 14, wobei das Empfangsmodul des Authentifizierungsservers ferner konfiguriert ist, um einen WLAN-Ressourcenbericht in dem Zugangsnetzwerksystem zu empfangen und eine Aktualisierung der WLAN-Ressourcenkonfiguration basierend auf dem WLAN-Ressourcenbericht zu bestimmen.

## Revendications

1. Procédé de gestion de ressources d'un réseau local sans fil WLAN dans un système de réseau d'accès, le système de réseau d'accès comprenant une passerelle de réseau, un dispositif de contrôle d'accès et un noeud d'accès sans fil contrôlé par le dispositif de contrôle d'accès,
le procédé comprenant les étapes suivantes :
réception (303), par la passerelle de réseau, d'une demande de configuration de ressources du WLAN ;
transmission (304), par la passerelle de réseau, d'un message de configuration de ressources du WLAN basé sur le protocole de contrôle de noeud d'accès ANCP (access node control protocol) au dispositif de contrôle d'accès conformément à la demande de configuration de ressources du WLAN reçue, demandant ainsi la création ou la suppression d'un WLAN sur le noeud d'accès sans fil ;
commande (305), par le dispositif de contrôle d'accès, du noeud d'accès sans fil afin qu'il effectue la gestion de la configuration du WLAN conformément au message de configuration de ressources du WLAN, la gestion de la configuration du WLAN comprenant la création ou la suppression du WLAN sur le noeud d'accès sans fil.

2. Procédé selon la revendication 1, dans lequel le message de configuration de ressources du WLAN basé sur le protocole ANCP comprend au moins les éléments suivants :
un type de message à distinguer des autres messages du type protocole ANCP ;
des informations adressables d'un noeud d'accès sans fil dans le système de réseau d'accès ; et
un paramètre de configuration de ressources du WLAN.

3. Procédé selon la revendication 2, dans lequel le paramètre de configuration de ressources du WLAN est un élément de gestion du WLAN conforme au protocole de contrôle et d'approvisionnement des points d'accès sans fil CAPWAP (Control and Provisioning of Wireless Access Points).

4. Procédé selon la revendication 1, dans lequel la demande de configuration de ressources du WLAN provient d'un serveur d'authentification tiers, le serveur d'authentification tiers effectue l'authentification de l'accès et la gestion d'une demande de service du WLAN provenant d'un utilisateur et génère la demande de configuration de ressources du WLAN pour la passerelle de réseau dans le système de réseau d'accès.

5. Procédé selon la revendication 1, le procédé comprenant en outre l'étape suivante :
transmission, par le dispositif de contrôle d'accès, d'un message de réponse à la passerelle de réseau pour confirmer si la configuration de ressources du WLAN a abouti ou non.

6. Dispositif de passerelle du réseau pour la gestion de ressources du WLAN dans un système de réseau d'accès,
la passerelle de réseau comprenant :
un module de réception configuré pour recevoir une demande de configuration de ressources du WLAN ;
un module de transmission, configuré pour transmettre un message de configuration de ressources du WLAN basé sur le protocole de contrôle de noeud d'accès ANCP à un dispositif de contrôle d'accès conformément à la demande de configuration de ressources du WLAN reçue, demandant ainsi la création ou la suppression d'un WLAN sur un noeud d'accès sans fil.

7. Dispositif de passerelle de réseau selon la revendication 6, dans laquelle la demande de configuration de ressources du WLAN provient d'un serveur d'authentification tiers ou d'un serveur de règles.

8. Dispositif de passerelle de réseau selon la revendication 7, dans laquelle le module de réception est en outre configuré pour recevoir un message de réponse du dispositif de contrôle d'accès afin de confirmer si la configuration de ressources du WLAN a abouti ou non.

9. Dispositif de passerelle de réseau selon la revendication 8, dans laquelle le module de transmission est en outre configuré pour transmettre un résultat de configuration de ressources du WLAN à un serveur d'authentification tiers ou à un serveur de règles conformément au message de réponse.

10. Dispositif de contrôle d'accès pour la gestion de ressources du WLAN dans un système de réseau d'accès, **caractérisé en ce que** le dispositif de contrôle d'accès comprend :
un module de réception configuré pour obtenir, à partir d'une passerelle de réseau du système de réseau d'accès, un message de configuration de ressources du WLAN basé sur le protocole de contrôle de noeud d'accès ANCP demandant la création ou la suppression d'un WLAN sur un noeud d'accès sans fil ;
un module de contrôle configuré pour contrôler le noeud d'accès sans fil afin d'effectuer la gestion de la configuration du WLAN conformément au message de configuration de ressources du WLAN, dans lequel la gestion de la configuration du WLAN comprend la création ou la suppression du WLAN sur le noeud d'accès sans fil.

11. Dispositif de contrôle d'accès selon la revendication 10, dans lequel le module de contrôle est en outre configuré pour transmettre un message de réponse à la passerelle de réseau afin de confirmer si la configuration de ressources du WLAN a abouti ou non.

12. Dispositif de contrôle d'accès selon la revendication 10, qui comprend en outre :
un module de détection configuré pour détecter l'utilisation des ressources du WLAN configurées et en rendre compte à la passerelle de réseau du système de réseau d'accès.

13. Système de réseau d'accès, le système de réseau d'accès comprenant une passerelle, un dispositif de contrôle d'accès et une pluralité de noeuds d'accès sans fil contrôlée par le dispositif de contrôle d'accès, dans lequel
la passerelle de réseau est configurée pour recevoir une demande de configuration de ressources du WLAN et pour transmettre un message de configuration de ressources du WLAN basé sur le protocole de contrôle de noeud d'accès ANCP au dispositif de contrôle d'accès conformément à la demande de configuration de ressources du WLAN demandant ainsi la création ou la suppression d'un WLAN sur un noeud d'accès sans fil ;
le dispositif de contrôle d'accès est configuré pour contrôler le noeud d'accès sans fil afin d'effectuer la gestion de la configuration du WLAN conformément au message de configuration de ressources du WLAN, dans lequel la gestion de la configuration du WLAN comprend la création ou la suppression du WLAN sur le noeud d'accès sans fil.

14. Système de réseau d'accès selon la revendication 13, dans lequel le système de réseau d'accès comprend en outre un serveur d'authentification pour la gestion de ressources du WLAN, le serveur d'authentification comprenant :
un module de réception configuré pour recevoir une demande de service du WLAN d'un site mobile ;
un module d'authentification configuré pour authentifier la demande de service du WLAN et attribuer des paramètres d'accès au WLAN au site mobile ; et
un module de transmission configuré pour transmettre les paramètres d'accès au WLAN au site mobile et transmettre la demande de configuration de ressources du WLAN à la passerelle de réseau dans le système de réseau d'accès, la demande de configuration de ressources du WLAN amenant la passerelle de réseau à transmettre le message de configuration de ressources du WLAN basé sur le protocole de contrôle de noeud d'accès ANCP au dispositif de contrôle d'accès demandant ainsi la création ou la suppression du WLAN sur le noeud d'accès sans fil pour effectuer, pour le noeud d'accès sans fil, la gestion de configuration du WLAN correspondant, adaptée pour que le site mobile puisse accéder au système de réseau d'accès, dans lequel la gestion de la configuration du WLAN comprend la création ou la suppression du WLAN sur le noeud d'accès sans fil.

15. Système de réseau d'accès selon la revendication 14, dans lequel le module de réception du serveur d'authentification est en outre configuré pour recevoir un compte rendu de ressources du WLAN dans le système de réseau d'accès et pour déterminer la mise à jour de la configuration de ressources du WLAN sur la base du compte rendu de ressources du WLAN.
